(19) Europäisches Patentamt / European Patent Office / Office européen des brevets

(11) **EP 4 198 487 A1**

(12) **EUROPEAN PATENT APPLICATION**
published in accordance with Art. 153(4) EPC

(43) Date of publication:
**21.06.2023 Bulletin 2023/25**

(21) Application number: **21857992.8**

(22) Date of filing: **07.05.2021**

(51) International Patent Classification (IPC):
*G01N 3/00* (2006.01)    *G01N 3/32* (2006.01)
*G21C 17/003* (2006.01)

(52) Cooperative Patent Classification (CPC):
**G01N 3/00; G01N 3/32; G21C 17/003;** Y02E 30/30

(86) International application number:
**PCT/JP2021/017524**

(87) International publication number:
**WO 2022/038840 (24.02.2022 Gazette 2022/08)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **17.08.2020 JP 2020137362**

(71) Applicant: **Hitachi, Ltd.**
**Tokyo 100-8280 (JP)**

(72) Inventors:
• **AMAKAWA Hiroaki**
  **Tokyo 100-8280 (JP)**
• **KOYAMA Shigeyuki**
  **Tokyo 100-8280 (JP)**

(74) Representative: **Mewburn Ellis LLP**
**Aurora Building**
**Counterslip**
**Bristol BS1 6BX (GB)**

(54) **CRACK PROGRESS EVALUATION DEVICE AND CRACK PROGRESS EVALUATION PROGRAM**

(57)    A crack progress evaluation device (140) according to the present invention is provided with: a stress estimation formula creation unit (230) that creates a stress estimation formula for estimating a stress occurring in equipment as a polynomial including the state of the equipment measured by a sensor; a stress estimation unit (250) that estimates a stress by inputting a measurement value of the state of equipment to the stress estimation formula; a stress amplitude appearance frequency count unit (260) that obtains a stress amplitude appearance frequency distribution on the basis of the stress estimated by the stress estimation unit (250); a present crack depth calculation unit (280) that obtains a present crack depth by using a past crack depth measurement value and the appearance frequency distribution; an operation plan input unit (310) that receives input of an operation plan of an industrial plant; a stress amplitude appearance frequency acquisition unit (320) that obtains a probability density function of the appearance frequency distribution reflecting a future operation plan; and a future crack depth calculation unit (330) that calculates and obtains a future crack depth by using the present crack depth and the probability density function.

*FIG. 1*

**Description**

Technical Field

The present invention relates to an apparatus and a program for evaluating growth of a crack.

Background Art

It is known that an initial defect exists on a surface or inside of a metal material constituting a device, and a crack is generated from the initial defect and grows when a load is repeatedly applied during operation of the device. In aircrafts and power plants where it is important to maintain reliability, non-destructive inspection is periodically performed in order to monitor the state of occurrence and growth of cracks. When a crack having a size larger than a prescribed size is found, the crack is repaired to maintain the reliability of the device. The non-destructive inspection is generally performed in a state where operation of the device is stopped. For this reason, it is important to monitor the state of growth of a crack in order to maintain the reliability of the device. However, non-destructive inspection with excessive frequency causes a decrease in an operation rate of the device. It is therefore important to estimate a growth amount of a crack during the operation of the device and perform the non-destructive inspection at a reasonable frequency in order to achieve both the reliability and the operation rate of the device.

As a technique for estimating a growth amount of a crack, probabilistic fracture mechanics (PFM) has been proposed. In PFM, an influence parameter related to growth of a crack is expressed by a random variable, and the crack is evaluated on the basis of a probability distribution unique to the parameter. In PFM, variation and uncertainty of the influence parameter can be considered, and therefore, the growth of the crack can be estimated with higher accuracy.

PTL 1 discloses an example of a technique for calculating a theoretical size of a crack that grows with a lapse of time by using the probabilistic fracture mechanics.

Citation List

Patent Literature

PTL 1: JP 2020-016542 A

Summary of Invention

Technical Problem

In a conventional technique, since the applied load is also given as a random variable to evaluate the growth amount of a crack, it is difficult to estimate how much the crack has grown at the present time with respect to the load actually applied during operation. It is therefore also difficult to estimate how much the crack at the present time will grow in the future on the basis of a future operation plan of the plant in which the device is installed. That is, in the conventional technique, it is difficult to estimate a tendency of current and future growth of a crack (that is, a change in a depth of the crack) of the device, and it is difficult to plan an execution timing and frequency of the non-destructive inspection to be performed on the device.

An object of the invention is to provide a crack growth evaluation apparatus and a crack growth evaluation program capable of estimating a current depth of a crack and a future depth of the crack with high accuracy.

Solution to Problem

A crack growth evaluation apparatus of the invention includes a stress estimation equation creator that creates a stress estimation equation that is an equation for estimating a stress generated at a crack evaluation target position of a device in which growth of a crack is evaluated, as a polynomial including a sensor measurement target item that is a state of the device, the state being measured by a sensor, and a stress estimator that estimates the stress by inputting a measurement value of the state of the device measured by the sensor to the stress estimation equation, a stress amplitude appearance frequency counter that obtains an appearance frequency distribution of an amplitude of the stress on the basis of the stress estimated by the stress estimator, a current crack depth calculator that obtains a current depth of the crack for the crack evaluation target position through calculation by using a measurement value of a past depth of the crack and the appearance frequency distribution, an operation plan input unit that inputs an operation plan of a plant in which the device is installed, a stress amplitude appearance frequency acquirer that obtains a probability density function of the appearance frequency distribution in which a future operation plan is reflected by reflecting the future operation plan in the appearance frequency distribution acquired from the stress amplitude appearance frequency counter, and a future crack depth calculator that obtains a future depth of the crack for the crack evaluation target position through calculation by using the current depth of the crack and the probability density function.

A crack growth evaluation program causes a computer to perform a stress estimation equation creating step of creating a stress estimation equation that is an equation for estimating a stress generated at a crack evaluation target position of a device in which growth of a crack is evaluated, as a polynomial including a sensor measurement target item that is a state of the device, the state being measured by a sensor, a stress estimation step of estimating the stress by inputting a measurement value of the state of the device measured by the sensor to the stress estimation equation, a stress amplitude appearance frequency counting step of obtaining an appearance frequency distribution of an amplitude of the stress based on the stress having been estimated in the stress estimation step, a current crack depth calculation step of obtaining a current depth of the crack for the crack evaluation target position through calculation by using a measurement value of a past depth of the crack and the appearance frequency distribution, an operation plan input step of inputting an operation plan of a plant in which the device is installed, a stress amplitude appearance frequency acquiring step of obtaining a probability density function of the appearance frequency distribution in which a future operation plan is reflected by reflecting the future operation plan in the appearance frequency distribution having been obtained in the stress amplitude appearance frequency counting step, and a future crack depth calculation step of obtaining a future depth of the crack for the crack evaluation target position through calculation by using the current depth of the crack and the probability density function.

Advantageous Effects of Invention

The invention can provide a crack growth evaluation apparatus and a crack growth evaluation program capable of estimating a current depth of a crack and a future depth of the crack with high accuracy.

Brief Description of Drawings

[FIG. 1] FIG. 1 is a block diagram of a crack growth evaluation system including a crack growth evaluation apparatus according to an embodiment of the invention.
[FIG. 2] FIG. 2 is a diagram illustrating an example of a measurement value group DH1 of a depth of a crack.
[FIG. 3] FIG. 3 is a diagram illustrating an example of a measurement value group DH2 of a state of a device by a sensor.
[FIG. 4] FIG. 4 is a block diagram illustrating an example of a configuration of a stress estimation equation creator.
[FIG. 5] FIG. 5 is a diagram illustrating an example of s combinations of input conditions for structural analysis for design variables.
[FIG. 6] FIG. 6 is a diagram illustrating an example of an appearance frequency group FQ1 of a stress amplitude SAw and an appearance frequency group FQ2 of the stress amplitude SAw per unit time.
[FIG. 7] FIG. 7 is a diagram illustrating an example of a display screen displayed by a display.
[FIG. 8] FIG. 8 is a diagram illustrating another example of the display screen displayed by the display.

Description of Embodiments

A crack growth evaluation apparatus of the invention can estimate a current depth of a crack with high accuracy by using a depth of the crack measured in the past by non-destructive inspection and a state of the device measured at present for the crack existing on a surface or inside of a metal member constituting the device, estimate a future depth of the crack with high accuracy on the basis of the estimated current depth of the crack and a future operation plan of a plant in which the device is installed, and evaluate growth of the crack. A crack growth evaluation program of the invention causes a computer to execute the above processing of estimating a current depth of a crack and a future depth of the crack.

Hereinafter, a crack growth evaluation apparatus and a crack growth evaluation program according to an embodiment of the invention will be described with reference to the drawings.

[First embodiment]

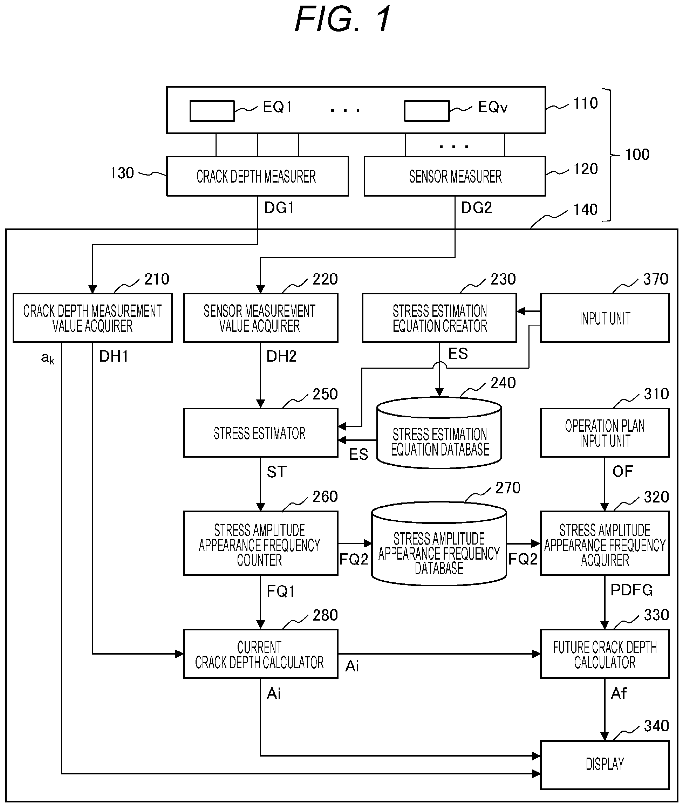

FIG. 1 is a block diagram of a crack growth evaluation system 100 including a crack growth evaluation apparatus 140 according to an embodiment of the invention.

The crack growth evaluation system 100 includes an evaluation target device 110, a sensor measurer 120, a crack depth measurer 130, and the crack growth evaluation apparatus 140 according to this embodiment.

The evaluation target device 110 is a plurality of devices installed in a plant (for example, a nuclear power plant), and crack growth of the devices is evaluated by the crack growth evaluation apparatus 140. FIG. 1 shows the evaluation target device 110 including v devices EQ1 to EQv. The devices EQ1 to EQv are, for example, pressure vessels and pipes of a nuclear power plant. The reference sign v represents the number of devices.

The sensor measurer 120 includes a plurality of sensors (not shown) installed in the evaluation target device 110. The sensor measurer 120 measures states (for example, temperature or pressure) of the devices EQ1 to EQv by sensors, and outputs measurement results (measurement values by the sensors) as an original measurement value group DG2 to the crack growth evaluation apparatus 140. The sensor measurer 120 measures the states of the devices EQ1 to EQv by using the sensors for p (p is a natural number of 2 or more) sensor measurement target items DM1 to DMp, for example. The reference sign p represents the number of sensor measurement target items.

The sensor measurement target items DM1 to DMp are, for example, p states of the devices EQ1 to EQv such as temperature of the pressure vessels, pressure of the pressure vessels, pressure of the pipes, and temperature of the pipes. The reference sign p represents the number of sensor measurement target items.

The crack depth measurer 130 measures depths of the cracks of the devices EQ1 to EQv by non-destructive inspection, and outputs measurement results as an original measurement value group DG1 to the crack growth evaluation apparatus 140. The crack depth measurer 130 measures the depths of cracks for m (m is a natural number of 2 or more) crack evaluation target positions DN1 to DNm, for example.

The crack evaluation target position DNr ($1 \leq r \leq m$) is, for example, m positions for evaluating a crack, such as a body base material portion of a pressure vessel, a body welded portion of a pressure vessel, and a welded portion of a pipe. The reference sign m represents the number of crack evaluation target positions.

The crack growth evaluation apparatus 140 according to this embodiment is configured by a computer, and estimates a current depth of the crack and a future depth of the crack by using the original measurement value group DG1 and the original measurement value group DG2. The crack growth evaluation apparatus 140 includes hardware as a general computer, such as a central processing unit (CPU), a random access memory (RAM), a read only memory (ROM), and a solid state drive (SSD). The SSD stores an operating system (OS), an application program, various data, and the like. The OS and the application program are developed in the RAM and executed by the CPU. In FIG. 1, functions implemented by the application program or the like are illustrated in blocks inside the crack growth evaluation apparatus 140.

The crack growth evaluation apparatus 140 includes an input unit 370, a crack depth measurement value acquirer 210, a sensor measurement value acquirer 220, a stress estimation equation creator 230, a stress estimation equation database 240, a stress estimator 250, a stress amplitude appearance frequency counter 260, a stress amplitude appearance frequency database 270, a current crack depth calculator 280, an operation plan input unit 310, a stress amplitude appearance frequency acquirer 320, a future crack depth calculator 330, and a display 340.

First, a method of calculating the current depth of the crack will be described together with the description of the configuration of the crack growth evaluation apparatus 140.

The input unit 370 is operated by a user to input information necessary for processing of the crack growth evaluation apparatus 140. The user of the crack growth evaluation apparatus 140 operates the input unit 370 to input information necessary for processing of the crack growth evaluation apparatus 140 to the crack growth evaluation apparatus 140.

The crack depth measurement value acquirer 210 acquires the original measurement value group DG1 (depths of the cracks of the devices EQ1 to EQv) from the crack depth measurer 130. The crack depth measurement value acquirer 210 outputs a measurement value group DH1 on the basis of the original measurement value group DG1 acquired from the crack depth measurer 130 as a measurement value of a crack depth $a_k$ at a k-th time point $t_k$ (k is a natural number, and k < i) before a current i-th time point ti (i is a natural number). The measurement value group DH1 is an accumulation of the measurement values of the crack depths $a_k$ at the crack evaluation target positions DN1 to DNm at the past time point $t_k$.

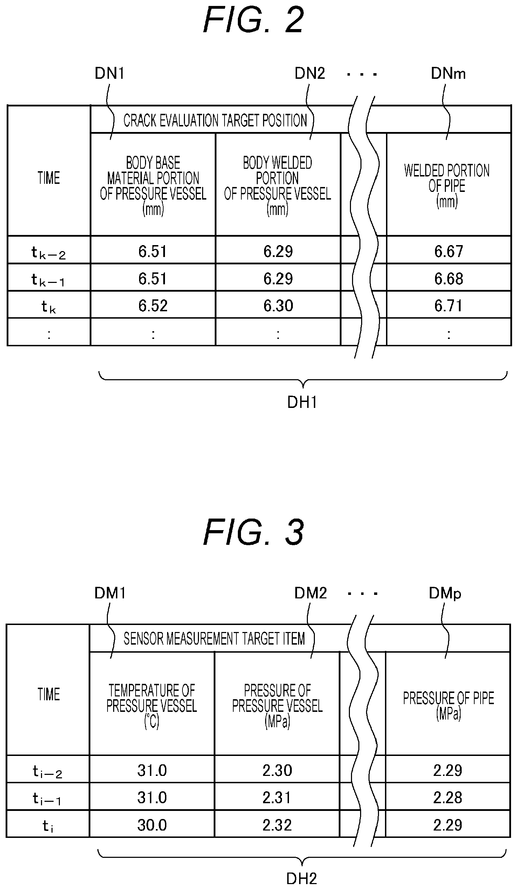

FIG. 2 is a diagram illustrating an example of the measurement value group DH1. FIG. 2 illustrates, as an example, the measurement values of the depths of the cracks at the crack evaluation target positions DN1 to DNm at a (k-2)-th time point $t_{k-2}$, a (k-1)-th time point $t_{k-1}$, and a k-th time point $t_k$ in the past as the measurement value group DH1. The example shown in FIG. 2 illustrates a body base material portion of a pressure vessel, a body welded portion of a pressure vessel, and a welded portion of a pipe as the crack evaluation target position DNr ($1 \leq r \leq m$).

Referring to FIG. 1 again, the description of the crack growth evaluation apparatus 140 will be continued.

The sensor measurement value acquirer 220 acquires an original measurement value group DG2 (values of states of the devices EQ1 to EQv measured by the sensors for the sensor measurement target items DM1 to DMp) from the sensor measurer 120. The sensor measurement value acquirer 220 outputs a measurement value group DH2 on the basis of the original measurement value group DG2 acquired from the sensor measurer 120 during operation of the devices EQ1 to EQv at the current i-th time point ti. The measurement value group DH2 is an accumulation of the measurement values of the states of the devices EQ1 to EQv by the sensors at the current time point ti, that is, the measurement values of the sensor measurement target items DM1 to DMp.

FIG. 3 is a diagram illustrating an example of the measurement value group DH2. FIG. 3 illustrates, as an example, the measurement values of the sensor measurement target items DM1 to DMp at an (i-2)-th time point $t_{i-2}$, an (i-1)-th time point $t_{i-1}$, and an i-th time point ti as the measurement value group DH2. The example shown in FIG. 3 illustrates temperature of a pressure vessel, pressure of a pressure vessel, and pressure of a pipe as the sensor measurement target items DM1 to DMp. Although not shown in FIG. 3, for example, the temperature of the pipe can also be included in the sensor measurement target item, and the measurement value of the temperature of the pipe can be included in the measurement value group DH2.

Referring to FIG. 1 again, the description of the crack growth evaluation apparatus 140 will be continued.

The stress estimation equation creator 230 creates an equation for estimating a stress generated at each of the crack evaluation target positions DN1 to DNm. The stress estimation equation creator 230 derives the stress estimation equation by using a response surface methodology as an equation approximately expressed by a polynomial including the sensor measurement target items DM1 to DMp as parameters.

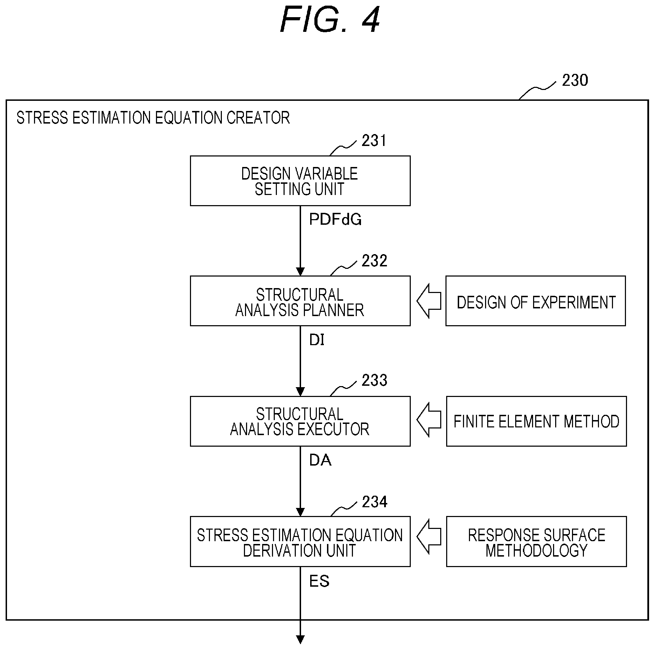

FIG. 4 is a block diagram illustrating an example of a configuration of the stress estimation equation creator 230. The stress estimation equation creator 230 includes a design variable setting unit 231, a structural analysis planner 232, a structural analysis executor 233, and a stress estimation equation derivation unit 234.

The design variable setting unit 231 determines q design variables DV1 to DVq for the evaluation target device 110, and sets probability density functions PDFd1 to PDFdq of values taken by the design variables DV1 to DVq. The reference sign q is a natural number of 2 or more and represents the number of design variables. The design variables DV1 to DVq are parameters that affect the stress generated at the crack evaluation target positions DN1 to DNm, that is, parameters related to the growth of the crack generated at the crack evaluation target positions DN1 to DNm. The design variable setting unit 231 outputs the set probability density functions PDFd1 to PDFdq to the structural analysis planner 232 as a probability density function group PDFdG of the values taken by the design variables DV1 to DVq.

The user of the crack growth evaluation apparatus 140 operates the input unit 370 to input the types of q design variables DV1 to DVq and the probability density functions PDFd1 to PDFdq of the values taken by the design variables DV1 to DVq to the crack growth evaluation apparatus 140. The input unit 370 is operated by the user to input the design variables DV1 to DVq and the probability density functions PDFd1 to PDFdq to the design variable setting unit 231. The design variable setting unit 231 determines the design variables DV1 to DVq by user inputting via the input unit 370, and sets the probability density functions PDFd1 to PDFdq.

The types of the design variables DV1 to DVq are not limited, and can be arbitrarily set as long as the variables can be used for designing the evaluation target device 110. However, the design variables DV1 to DVq are set so as to include the sensor measurement target items DM1 to DMp. That is, p design variables of q design variables DV1 to DVq are the sensor measurement target items DM1 to DMp. For example, the design variables DV1 to DVq can include the temperature of the pressure vessel, the pressure of the pressure vessel, and the pressure of the pipe as variables included in the sensor measurement target items DM1 to DMp. In addition, for example, the design variables DV1 to DVq can include, as variables other than the sensor measurement target items DM1 to DMp, values related to the evaluation target device 110, such as physical property values such as an outer diameter of the pressure vessel, a thickness of the pressure vessel, an outer diameter of the pipe, a thickness of the pipe, and the Young's modulus of a base material and a welding material of the pressure vessel and the pipe.

The user of the crack growth evaluation apparatus 140 operates the input unit 370 to input values of variables other than the sensor measurement target items DM1 to DMp of the design variables DV1 to DVq to the crack growth evaluation apparatus 140.

The probability density functions PDFd1 to PDFdq to be set are not limited, and can be arbitrarily set as long as the probability density functions are suitable for representing variation of the design variables DV1 to DVq.

The structural analysis planner 232 determines s combinations (s is a natural number) of input conditions for structural analysis for the design variables DV1 to DVq by random numbers according to the probability density functions PDFd1 to PDFdq of values taken by the design variables DV1 to DVq set by the design variable setting unit 231. The structural analysis planner 232 outputs the determined s combinations of input conditions for structural analysis to the structural analysis executor 233 as an input condition group DI. The reference sign s represents the number of combinations of input conditions for structural analysis, and is determined by the user of the crack growth evaluation apparatus 140.

The user of the crack growth evaluation apparatus 140 operates the input unit 370 to input the number s of combinations of input conditions for structural analysis for the design variables DV1 to DVq to the crack growth evaluation apparatus 140. The input unit 370 is operated by the user to input the number s of combinations of input conditions to the structural analysis planner 232.

The combination of input conditions for structural analysis is usually determined randomly by Monte Carlo method in many cases. In this embodiment, the structural analysis planner 232 determines s combinations for the design variables DV1 to DVq, which are input conditions for structural analysis, on the basis of a design of experiment. By using the design of experiment, the structural analysis planner 232 can efficiently determine a combination without duplication as compared with the case of using the Monte Carlo method. A method of the design of experiment used by the structural analysis planner 232 is not limited, and any method such as Latin hypercube sampling can be used.

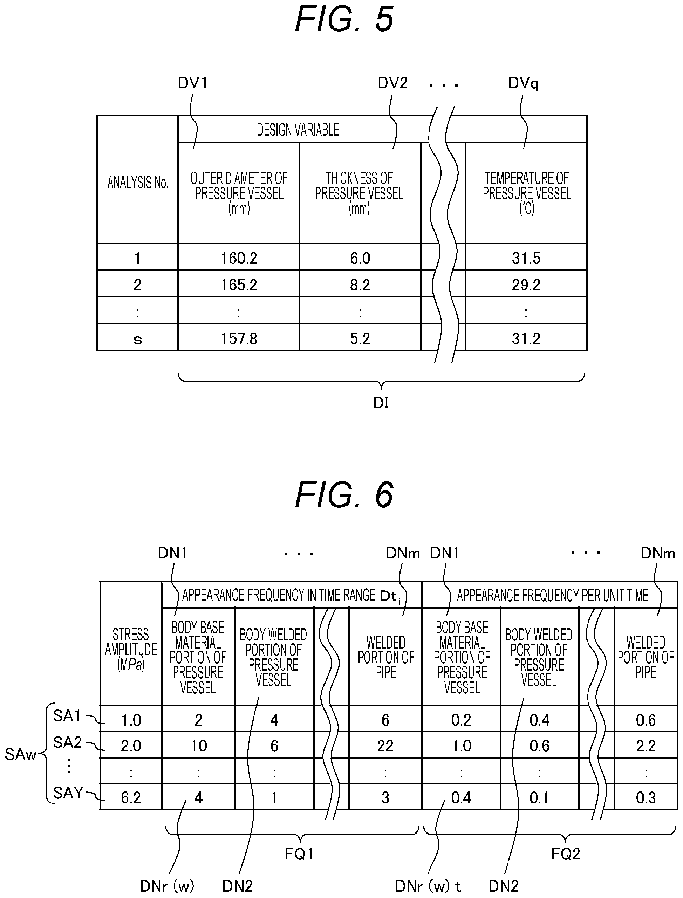

FIG. 5 is a diagram illustrating an example of s combinations of input conditions (input condition group DI) for structural analysis for design variables DV1 to DVq determined by the structural analysis planner 232. FIG. 5 illustrates, as an example, the outer diameter of the pressure vessel, the thickness of the pressure vessel, and the temperature of the pressure vessel as design variables DV1 to DVq, and illustrates s combinations of input conditions for the design variables DV1 to DVq. The temperature of the pressure vessel is a design variable included in the sensor measurement target items DM1 to DMp.

Referring to FIG. 4 again, the description of the stress estimation equation creator 230 will be continued.

The structural analysis executor 233 performs the structural analysis s times on the basis of the s combinations of input conditions for the structural analysis determined by the structural analysis planner 232, and obtains a stress generated at each of the crack evaluation target positions DN1 to DNm. The structural analysis executor 233 performs structural analysis by a finite element method. The number of combinations of input conditions for structural analysis for the design variables DV1 to DVq is usually large, and it takes a long time to perform structural analysis for all combinations by the finite element method. In this embodiment, since the structural analysis is performed on s combinations of input conditions of the large number of input conditions, the time required for calculation can be reduced. The result of the structural analysis is used by the stress estimation equation derivation unit 234 to derive an equation for estimating the stress generated at each of the crack evaluation target positions DN1 to DNm.

The structural analysis executor 233 outputs a stress $Sr$ ($r$ is a natural number of $1 \leq r \leq m$) generated at each of the obtained crack evaluation target positions DN1 to DNm to the stress estimation equation derivation unit 234 as a structural analysis result group DA.

The stress estimation equation derivation unit 234 derives an equation for estimating the stress $Sr$ ($r$ is a natural number of $1 \leq r \leq m$) generated at each of the crack evaluation target positions DN1 to DNm from the results of the structural analysis performed s times by the structural analysis executor 233 (structural analysis result group DA). The stress estimation equation derivation unit 234 derives m estimation equations of the stress $Sr$ by approximating and expressing the stress $Sr$ by polynomials of the design variables DV1 to DVq by the response surface methodology. The stress estimation equation derivation unit 234 can derive an estimation equation of the stress $Sr$ by the response surface methodology with a conventional technique. The stress estimation equation derivation unit 234 outputs m estimation equations of the stress $Sr$ to the stress estimation equation database 240 as a stress estimation equation group ES.

Equation (1) is an example of the estimation equation of the stress $Sr$ generated at each of the crack evaluation target positions DNr ($1 \leq r \leq m$). The stress $Sr$ is approximately expressed by polynomials of the design variables DV1 to DVq.

[Math. 1]

$$Sr = b_{0r} + b_{1r}DV_1 + b_{2r}DV_2 + \cdots + b_{qr}DV_q \qquad \cdots \text{ Equation (1)}$$

In Equation (1), $r$ satisfies $1 \leq r \leq m$, and b0r, b1r, b2r, $\cdots$, and bqr are constants.

Referring to FIG. 1 again, the description of the crack growth evaluation apparatus 140 will be continued.

The stress estimation equation database 240 accumulates the stress estimation equation group ES created by the stress estimation equation creator 230.

The stress estimator 250 inputs the values of the measurement value group DH2 at the current time point ti (the measurement values of the sensor measurement target items DM1 to DMp) and values of the design variables DV1 to DVq other than the sensor measurement target items DM1 to DMp to the stress estimation equation group ES acquired from the stress estimation equation database 240. Then, the stress estimator 250 calculates and estimates the stress $Sr$ generated at each of the crack evaluation target positions DNr ($1 \leq r \leq m$) at the i-th time point ti. The stress estimator 250 acquires the measurement values of the sensor measurement target items DM1 to DMp at the current time point ti from the sensor measurement value acquirer 220. The stress estimator 250 acquires the values of the design variables DV1 to DVq other than the sensor measurement target items DM1 to DMp from the input unit 370. The user operates the input unit 370 to input the values of the design variables DV1 to DVq other than the sensor measurement target items DM1 to DMp. The stress estimator 250 outputs the estimated m stresses $Sr$ as a stress group ST.

The time required for the stress estimator 250 to calculate the stress $Sr$ is about several milliseconds per measurement. When the stress is estimated by a finite element analysis, several hours are required for calculation per measurement. In this embodiment, since the stress estimator 250 calculates the stress $Sr$ by the stress estimation equation, the stress $Sr$ can be calculated in a short time and estimated with a small time delay from the current time point ti.

The stress amplitude appearance frequency counter 260 obtains an appearance frequency distribution of a stress amplitude in a time range $Dt_i$ up to the present on the basis of the stress Sr estimated by the stress estimator 250. For example, by using the stress group ST acquired from the stress estimator 250, the stress amplitude appearance frequency counter 260 obtains an appearance frequency distribution of the amplitude of the stress applied to the time range $Dt_i$ from the (i-1)-th time point $t_{i-1}$ to the i-th time point ti during a service period of the evaluation target device 110 by the rainflow method. As a result, the stress amplitude appearance frequency counter 260 can obtain an appearance frequency group FQ1 of the stress amplitude in the time range $Dt_i$ and an appearance frequency group FQ2 of the stress amplitude per unit time in the time range $Dt_i$. The stress amplitude appearance frequency counter 260 outputs the appearance frequency group FQ1 of the stress amplitude in the time range $Dt_i$ and the appearance frequency group FQ2 of the stress amplitude per unit time.

FIG. 6 is a diagram illustrating an example of the appearance frequency group FQ1 of a stress amplitude SAw ($1 \leq w \leq Y$) in the time range $Dt_i$ and the appearance frequency group FQ2 of the stress amplitude SAw per unit time in the time range $Dt_i$. The reference sign Y represents the number of values of the stress amplitude in the appearance frequency distribution of the stress amplitude. The appearance frequency group FQ1 includes an appearance frequency DNr(w) of the stress amplitude SAw in each of the crack evaluation target positions DNr ($1 \leq r \leq m$) in the time range $Dt_i$. The appearance frequency group FQ2 includes an appearance frequency DNr(w)t of the stress amplitude SAw per unit time in each of the crack evaluation target positions DNr ($1 \leq r \leq m$) in the time range $Dt_i$. The appearance frequency DNr(w)t of the stress amplitude SAw per unit time is obtained by dividing the appearance frequency DNr(w) of the stress amplitude SAw in the time range $Dt_i$ by the time range $Dt_i$.

Referring to FIG. 1 again, the description of the crack growth evaluation apparatus 140 will be continued.

The stress amplitude appearance frequency database 270 accumulates the appearance frequency group FQ2 of the stress amplitude SAw per unit time in the time range $Dt_i$, the appearance frequency group FQ2 being output by the stress amplitude appearance frequency counter 260.

The current crack depth calculator 280 calculates a crack depth ai at the current i-th time point ti for each of the crack evaluation target positions DNr ($1 \leq r \leq m$) by crack growth prediction equations shown in Equations (2) to (4). The crack growth prediction equations are known. The current crack depth calculator 280 acquires the measurement value group DH1 of the crack depth $a_k$ at the past time point $t_k$ from the crack depth measurement value acquirer 210, and acquires the appearance frequency group FQ1 of the stress amplitude in the time range $Dt_i$ from the stress amplitude appearance frequency counter 260 to acquire the appearance frequency DNr(w) of the stress amplitude SAw. Then, the current crack depth calculator 280 obtains the crack depth ai at the current i-th time point ti for each of the crack evaluation target positions DNr through calculation with Equations (2) to (4) by using the measurement value group DH1 of a crack depth $a_{i-1}$ at the past (i-1)-th time point $t_{i-1}$ and the appearance frequency DNr(w) of the stress amplitude SAw.
[Math. 2]

$$a_i = a_{i-1} + Da_i \qquad \cdots \text{Equation (2)}$$

$a_i$: crack depth at current i-th time point
$a_{i-1}$: crack depth at (i-1)-th time point
$Da_i$: growth level of crack from (i-1)-th time point to i-th time point

[Math. 3]

$$Da_i = \sum_{w=1}^{Y} \left\{ C\left(\Delta K_w(t_i)\right)^n \times DN_r(w) \right\} \qquad \cdots \text{Equation (3)}$$

C, n: material constant
$\Delta K_w(t_i)$: w-th stress intensity factor at current i-th time point $t_i$
$DN_r(w)$: appearance frequency of w-th stress amplitude $\Delta\sigma_w$

[Math. 4]

$$\Delta K_w(t_i) = F\Delta\sigma_w(t_i)\sqrt{\pi a_{i-1}} \qquad \cdots \text{Equation (4)}$$

F: constant
$\Delta\sigma_w(t_i)$: w-th stress amplitude at current i-th time point $t_i$

$a_{i-1}$: crack depth at (i-1)-th time point

In Equations (2) to (4), although the calculation is performed by using the crack depth $a_{i-1}$ at the (i-1)-th time point $t_{i-1}$, if the (i-1)-th time point is the k-th time point, the calculation is performed as $a_{i-1} = a_k$.

The current crack depth calculator 280 outputs the obtained crack depth ai as a crack depth group Ai at the current i-th time point ti.

Next, a method of calculating the future depth of the crack will be described together with the description of the configuration of the crack growth evaluation apparatus 140.

The operation plan input unit 310 is operated by the user to input an operation plan OF of the plant in which the evaluation target device 110 (devices EQ1 to EQv) is installed. The user of the crack growth evaluation apparatus 140 operates the operation plan input unit 310 to input the operation plan OF to the crack growth evaluation apparatus 140. The operation plan OF is, for example, a plan of output (ratio to a maximum output) of the plant in which the evaluation target device 110 is installed. The operation plan input unit 310 inputs the output of the plant at a future f-th time point tf (f is a natural number, and f > i) as a future operation plan OF of the plant.

The stress amplitude appearance frequency acquirer 320 acquires the appearance frequency group FQ2 of the stress amplitude per unit time in the time range $Dt_i$ from the stress amplitude appearance frequency database 270. As described above, the appearance frequency group FQ2 includes the appearance frequency DNr(w)t of the stress amplitude SAw per unit time in each of the crack evaluation target positions DNr ($1 \leq r \leq m$) in the time range $Dt_i$.

Then, the stress amplitude appearance frequency acquirer 320 adjusts the appearance frequency DNr(w)t of the stress amplitude SAw in accordance with the future operation plan OF by reflecting the future operation plan OF in the appearance frequency group FQ2 of the stress amplitude. For example, the stress amplitude appearance frequency acquirer 320 reflects the future operation plan OF in the appearance frequency group FQ2 by multiplying the value of the appearance frequency group FQ2 (the appearance frequency DNr(w)t of the stress amplitude SAw) by the future operation plan OF (the ratio of the output of the plant to the maximum output).

Then, the stress amplitude appearance frequency acquirer 320 obtains a probability density function PDFr ($1 \leq r \leq m$) of the appearance frequency DNr(w)t of the stress amplitude SAw reflecting the future operation plan OF, and outputs the obtained probability density function PDFr as a probability density function group PDFG. The stress amplitude appearance frequency acquirer 320 can obtain the probability density function PDFr from the appearance frequency DNr(w)t of the stress amplitude SAw reflecting the future operation plan OF by any known technique. The type of the probability density function PDFr to be obtained is not limited, and any probability density function can be adopted as long as the appearance frequency DNr(w)t of the stress amplitude SAw reflecting the future operation plan OF can be appropriately represented.

The future crack depth calculator 330 calculates the crack depth af at the future f-th time point tf for each of the crack evaluation target positions DNr ($1 \leq r \leq m$) by performing Monte Carlo simulation based on the Monte Carlo method using crack growth prediction equations shown in Equations (5) to (7). The crack growth prediction equations are known. The future crack depth calculator 330 acquires the crack depth group Ai (crack depth ai at the current i-th time point ti for each of the crack evaluation target positions DN1 to DNm) at the current i-th time point ti from the current crack depth calculator 280, and acquires the probability density function group PDFG from the stress amplitude appearance frequency acquirer 320 to acquire the probability density function PDFr ($1 \leq r \leq m$). Then, the future crack depth calculator 330 obtains the crack depth af at the future f-th time point tf for each of the crack evaluation target positions DNr through calculation with Equations (5) to (7) by using the crack depth $a_{f-1}$ at the current (f-1)-th time point $t_{f-1}$ and the probability density function PDFr.

[Math. 5]

$$a_f = a_{f-1} + Da_f \qquad \cdots \text{ Equation (5)}$$

$a_f$: crack depth at future f-th time point
$a_{f-1}$: crack depth at (f-1)-th time point
$Da_f$: growth level of crack from (f-1)-th time point to f-th time point

[Math. 6]

$$Da_f = \sum_{w=1}^{Y} \left\{ C \left( \Delta K_w(t_f) \right)^n \times DN_r(w) \right\} \qquad \cdots \text{ Equation (6)}$$

C, n: material constant
$\Delta K_w(t_f)$: w-th stress intensity factor at future f-th time point $t_f$
$DN_r(w)$: appearance frequency of w-th stress amplitude $\Delta\sigma_w$

[Math. 7]

$$\Delta K_w\left(t_f\right) = F\Delta\sigma_w\left(t_f\right)\sqrt{\pi a_{f-1}} \qquad \cdots \text{Equation (7)}$$

F: constant
$\Delta\sigma_w(t_f)$: w-th stress amplitude at future f-th time point $t_f$
$a_{f-1}$: crack depth at (f-1)-th time point

The future crack depth calculator 330 determines a magnitude of the stress amplitude and the value of the appearance frequency DNr(w) by using random numbers according to probability density functions PDF1 to PDFm on the basis of the Monte Carlo method, and repeats the calculation of obtaining the crack depth af using the determined values a plurality of times to obtain variation in the crack depth af in consideration of the distribution of the stress amplitude.

In Equations (5) to (7), although the calculation is performed by using the crack depth $a_{f-1}$ at the (f-1)th time point $t_{f-1}$, if the (f-1) th time point is the kth time point, the calculation is performed as $a_{f-1}$ = ai.

The future crack depth calculator 330 outputs the obtained crack depth af as a crack depth group Af at the future f-th time point tf.

The display 340 displays, on the display screen, a calculation result of the crack growth evaluation apparatus 140, such as a temporal change in the depth of the crack at each of the crack evaluation target positions DN1 to DNm. The display 340 acquires the crack depth group Ai at the current i-th time point ti from the current crack depth calculator 280, acquires the crack depth group Af at the future f-th time point tf from the future crack depth calculator 330, and displays the crack depth ai and the crack depth af. In addition, the display 340 acquires the depth $a_k$ of the crack at the past k-th time point $t_k$ from the crack depth measurement value acquirer 210, and displays the crack depth $a_k$.

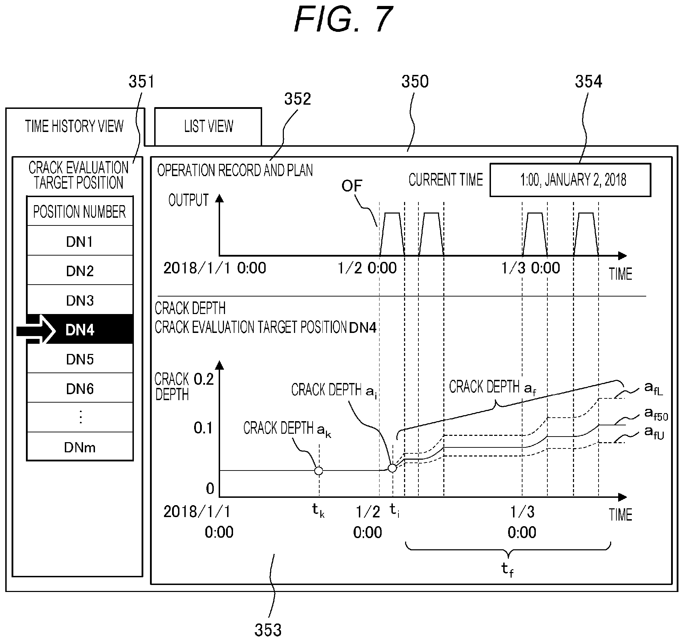

FIG. 7 is a diagram illustrating an example of a display screen 350 displayed by the display 340. The display screen 350 in FIG. 7 displays a crack evaluation target position selection field 351, an operation record and plan display field 352, a crack depth time history display field 353, and a time display field 354.

The crack evaluation target position selection field 351 has a function of displaying position numbers of the crack evaluation target positions DN1 to DNm and allowing the user of the crack growth evaluation apparatus 140 to select the crack evaluation target position to be displayed. FIG. 7 illustrates an example in which a crack evaluation target position DN4 is selected.

The operation record and plan display field 352 displays the operation plan OF (actual plant output or plant output input by the user) of the plant in which the evaluation target device 110 is installed.

The crack depth time history display field 353 displays the crack depth $a_k$ acquired from the crack depth measurer 130 at the past k-th time point $t_k$ at the crack evaluation target position selected in the crack evaluation target position selection field 351, the crack depth ai at the current i-th time point ti calculated by the current crack depth calculator 280, and the crack depth af at the future f-th time point tf calculated by the future crack depth calculator 330. The crack depth time history display field 353 can also display an average value $a_{f50}$, an upper limit $a_{fU}$ of a confidence interval (for example, 99% confidence interval), and a lower limit $a_{fL}$ of the confidence interval for the crack depth af at the future f-th time point tf.

The time display field 354 displays a date and time at the current i-th time point ti.

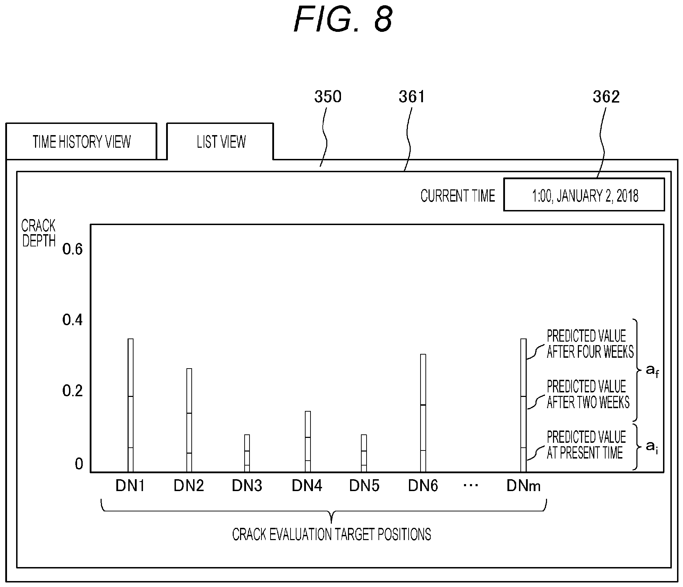

FIG. 8 is a diagram illustrating another example of the display screen 350 displayed by the display 340. The display screen 350 in FIG. 8 displays a crack depth display field 361 and a time display field 362.

The crack depth display field 361 displays, for each of the crack evaluation target positions DN1 to DNm, the crack depth ai at the current i-th time point ti calculated by the current crack depth calculator 280 and the crack depth $a_f$ at the future f-th time point $t_f$ calculated by the future crack depth calculator 330. FIG. 8 shows two weeks and four weeks from the present as an example at the future f-th time point tf. Although not shown in FIG. 8, the crack depth display field 361 can also display the crack depth $a_k$ acquired from the crack depth measurer 130 at the past k-th time point $t_k$.

As described above, the crack growth evaluation apparatus 140 according to this embodiment includes the crack depth measurement value acquirer 210 that acquires the measurement value of the crack depth $a_k$ at the past k-th time point $t_k$, the current crack depth calculator 280 that estimates the crack depth ai at the current i-th time point ti on the basis of the measurement value by the sensor acquired by the sensor measurement value acquirer 220, and the future crack depth calculator 330 that estimates the crack depth af at the future f-th time point tf on the basis of the future operation plan OF input by the operation plan input unit 310 and the crack depth ai at the current i-th time point ti estimated by the current crack depth calculator 280. In this configuration, the crack growth evaluation apparatus 140 according to this embodiment can calculate a current depth of a crack grown by a load actually applied during operation with high accuracy in consideration of variation with a small time delay without stopping the operation of the evaluation target device 110 for non-destructive inspection, and can also calculate a future depth of the crack estimated by the future operation plan OF with high accuracy.

By using the crack growth evaluation apparatus 140 according to this embodiment, the user can determine a frequency of non-destructive inspection in view of a growth speed of the crack, for example. When the user determines that the current depth of the crack may reach a prescribed depth of the crack, the user can promptly consider means of maintenance. The user can examine in advance the number of target devices to be maintained and means of maintenance during a period of periodic inspection planned in the future. In addition, the user can consider a life extending operation that changes the operation plan OF so as to delay the growth of the crack.

In the embodiment described above, an example has been described in which the crack growth evaluation apparatus 140 is applied to a nuclear power plant. However, the application target of the crack growth evaluation apparatus 140 is not limited to a nuclear power plant. For example, the crack growth evaluation apparatus 140 can be applied to various plants of thermal power generation, hydraulic power generation, and the like, wind power generators of wind power generation, railway vehicles, and the like.

The stress estimation equation database 240 and the stress amplitude appearance frequency database 270 may be installed inside or outside the crack growth evaluation apparatus 140. When the stress estimation equation database 240 and the stress amplitude appearance frequency database 270 are installed outside the crack growth evaluation apparatus 140, for example, the databases 240 and 270 can be installed in a computer different from the crack growth evaluation apparatus 140, and the databases 240 and 270 can be connected to the crack growth evaluation apparatus 140 via a network.

A hardware configuration of the crack growth evaluation apparatus 140 can be achieved by a general computer. Therefore, the crack growth evaluation program that causes a computer to execute various processing performed by the crack growth evaluation apparatus 140 can be stored in a storage medium and provided, or can be provided through a telecommunication line.

The various processing performed by the crack growth evaluation apparatus 140 may be processes by software using a program as described in the above embodiment, or a part or all of the processing may be processes by hardware using an application specific integrated circuit (ASIC), a field programmable gate array (FPGA), or the like.

Note that the invention is not limited to the above embodiments, but can be variously modified. For example, the above embodiments have been described in detail to facilitate understanding of the description of the invention, and the invention is not limited to an aspect including all the configurations described above. It is possible to replace a part of a configuration of one embodiment with a configuration of another embodiment. It is also possible to add a configuration of one embodiment to a configuration of another embodiment. It is also possible to delete a part of a configuration of each embodiment or add or replace a configuration with another configuration.

In the drawings, control lines and information lines considered to be necessary for the description are drawn, and not all control lines and information lines necessary as a product are necessarily drawn.

Reference Signs List

| | |
|---|---|
| 100 | crack growth evaluation system |
| 110 | evaluation target device |
| 120 | sensor measurer |
| 130 | crack depth measurer |
| 140 | crack growth evaluation apparatus |
| 210 | crack depth measurement value acquirer |
| 220 | sensor measurement value acquirer |
| 230 | stress estimation equation creator |
| 231 | design variable setting unit |
| 232 | structural analysis planner |
| 233 | structural analysis executor |
| 234 | stress estimation equation derivation unit |
| 240 | stress estimation equation database |
| 250 | stress estimator |
| 260 | stress amplitude appearance frequency counter |

| 270 | stress amplitude appearance frequency database |
| 280 | current crack depth calculator |
| 310 | operation plan input unit |
| 320 | stress amplitude appearance frequency acquirer |
| 330 | future crack depth calculator |
| 340 | display |
| 350 | display screen |
| 351 | crack evaluation target position selection field |
| 352 | operation record and plan display field |
| 353 | crack depth time history display field |
| 354 | time display field |
| 361 | crack depth display field |
| 362 | time display field |
| 370 | input unit |
| Af | crack depth group at future f-th time point tf |
| Ai | crack depth group at current i-th time point ti |
| DA | structural analysis result group |
| DG1 | original measurement value group |
| DG2 | original measurement value group |
| DH1 | measurement value group |
| DH2 | measurement value group |
| DI | input condition group |
| DM1 | to DMp sensor measurement target item |
| DN1 | to DNm, DNr(1 ≤ r ≤ m) crack evaluation target position DNr(w)(1 ≤ w ≤ Y) stress amplitude appearance frequency |
| $Dt_i$ | time range |
| DV1 | to DVq design variable |
| EQ1 | to EQv device |
| ES | stress estimation equation group |
| FQ1 | appearance frequency group of stress amplitude |
| FQ2 | appearance frequency group of stress amplitude per unit time |
| OF | operation plan |
| PDF1 | to PDFm probability density function |
| PDFd1 to PDFdq | probability density function |
| PDFdG | probability density function group |
| PDFG | probability density function group |
| PDFr(1 ≤ r ≤ m) | probability density function |
| SAw(1 ≤ w ≤ Y) | stress amplitude |
| Sr(1 ≤ r ≤ m) | stress |
| ST | stress group |
| m | number of crack evaluation target positions |
| p | number of sensor measurement target items |
| q | number of design variables |
| s | number of combinations of input conditions for structural analysis |
| v | number of devices |
| Y | number of values of stress amplitude |

**Claims**

1. A crack growth evaluation apparatus comprising:

a stress estimation equation creator that creates a stress estimation equation that is an equation for estimating a stress generated at a crack evaluation target position of a device in which growth of a crack is evaluated, as a polynomial including a sensor measurement target item that is a state of the device, the state being measured by a sensor;
a stress estimator that estimates the stress by inputting a measurement value of the state of the device measured by the sensor to the stress estimation equation;

a stress amplitude appearance frequency counter that obtains an appearance frequency distribution of an amplitude of the stress based on the stress estimated by the stress estimator;

a current crack depth calculator that obtains a current depth of the crack for the crack evaluation target position through calculation by using a measurement value of a past depth of the crack and the appearance frequency distribution;

an operation plan input unit that inputs an operation plan of a plant in which the device is installed;

a stress amplitude appearance frequency acquirer that obtains a probability density function of the appearance frequency distribution in which a future operation plan is reflected by reflecting the future operation plan in the appearance frequency distribution acquired from the stress amplitude appearance frequency counter; and

a future crack depth calculator that obtains a future depth of the crack for the crack evaluation target position through calculation by using the current depth of the crack and the probability density function.

2. The crack growth evaluation apparatus according to claim 1, further comprising:

a crack depth measurement value acquirer that acquires a measurement value of a depth of the crack at the crack evaluation target position; and

a sensor measurement value acquirer that acquires a value of a state of the device for the sensor measurement target item, the value being measured by the sensor, wherein

the stress estimator inputs the measurement value of the state of the device acquired by the sensor measurement value acquirer to the stress estimation equation, and

the current crack depth calculator acquires a measurement value of the past depth of the crack from the crack depth measurement value acquirer.

3. The crack growth evaluation apparatus according to claim 1, wherein

the stress estimation equation creator includes

a design variable setting unit that sets a probability density function of a value taken by a design variable that affects the stress generated at the crack evaluation target position,

a structural analysis planner that determines a combination concerning the design variable as an input condition for a structural analysis by a design of experiment based on the probability density function of the value taken by the design variable,

a structural analysis executor that performs the structural analysis by a finite element method based on the combination and obtains the stress generated at the crack evaluation target position, and

a stress estimation equation derivation unit that creates the stress estimation equation by expressing the stress obtained by the structural analysis executor by a polynomial of the design variable, by a response surface methodology, and

the design variable includes the sensor measurement target item.

4. A crack growth evaluation program that causes a computer to perform:

a stress estimation equation creating step of creating a stress estimation equation that is an equation for estimating a stress generated at a crack evaluation target position of a device in which growth of a crack is evaluated, as a polynomial including a sensor measurement target item that is a state of the device, the state being measured by a sensor;

a stress estimation step of estimating the stress by inputting a measurement value of the state of the device measured by the sensor to the stress estimation equation;

a stress amplitude appearance frequency counting step of obtaining an appearance frequency distribution of an amplitude of the stress based on the stress having been estimated in the stress estimation step;

a current crack depth calculation step of obtaining a current depth of the crack for the crack evaluation target position through calculation by using a measurement value of a past depth of the crack and the appearance frequency distribution;

an operation plan input step of inputting an operation plan of a plant in which the device is installed;

a stress amplitude appearance frequency acquiring step of obtaining a probability density function of the appearance frequency distribution in which a future operation plan is reflected by reflecting the future operation plan in the appearance frequency distribution having been obtained in the stress amplitude appearance frequency counting step; and

a future crack depth calculation step of obtaining a future depth of the crack for the crack evaluation target position through calculation by using the current depth of the crack and the probability density function.

# FIG. 1

## FIG. 2

| TIME | CRACK EVALUATION TARGET POSITION | | | |
| | DN1 | DN2 · · · | | DNm |
| | BODY BASE MATERIAL PORTION OF PRESSURE VESSEL (mm) | BODY WELDED PORTION OF PRESSURE VESSEL (mm) | | WELDED PORTION OF PIPE (mm) |
|---|---|---|---|---|
| $t_{k-2}$ | 6.51 | 6.29 | | 6.67 |
| $t_{k-1}$ | 6.51 | 6.29 | | 6.68 |
| $t_k$ | 6.52 | 6.30 | | 6.71 |
| : | : | : | | : |

DH1

## FIG. 3

| TIME | SENSOR MEASUREMENT TARGET ITEM | | | |
| | DM1 | DM2 · · · | | DMp |
| | TEMPERATURE OF PRESSURE VESSEL (°C) | PRESSURE OF PRESSURE VESSEL (MPa) | | PRESSURE OF PIPE (MPa) |
|---|---|---|---|---|
| $t_{i-2}$ | 31.0 | 2.30 | | 2.29 |
| $t_{i-1}$ | 31.0 | 2.31 | | 2.28 |
| $t_i$ | 30.0 | 2.32 | | 2.29 |

DH2

# FIG. 4

230

STRESS ESTIMATION EQUATION CREATOR

231

DESIGN VARIABLE
SETTING UNIT

PDFdG

232

STRUCTURAL
ANALYSIS PLANNER ⟸ DESIGN OF EXPERIMENT

DI

233

STRUCTURAL
ANALYSIS EXECUTOR ⟸ FINITE ELEMENT METHOD

DA

234

STRESS ESTIMATION EQUATION
DERIVATION UNIT ⟸ RESPONSE SURFACE
METHODOLOGY

ES

## FIG. 5

| ANALYSIS No. | DESIGN VARIABLE | | | |
|:---:|:---:|:---:|:---:|:---:|
| | OUTER DIAMETER OF PRESSURE VESSEL (mm) | THICKNESS OF PRESSURE VESSEL (mm) | | TEMPERATURE OF PRESSURE VESSEL (°C) |
| 1 | 160.2 | 6.0 | | 31.5 |
| 2 | 165.2 | 8.2 | | 29.2 |
| ⋮ | ⋮ | ⋮ | | ⋮ |
| s | 157.8 | 5.2 | | 31.2 |

DV1    DV2 · · · DVq

DI

## FIG. 6

| STRESS AMPLITUDE (MPa) | APPEARANCE FREQUENCY IN TIME RANGE $Dt_i$ | | | | APPEARANCE FREQUENCY PER UNIT TIME | | | |
|:---:|:---:|:---:|:---:|:---:|:---:|:---:|:---:|:---:|
| | BODY BASE MATERIAL PORTION OF PRESSURE VESSEL | BODY WELDED PORTION OF PRESSURE VESSEL | | WELDED PORTION OF PIPE | BODY BASE MATERIAL PORTION OF PRESSURE VESSEL | BODY WELDED PORTION OF PRESSURE VESSEL | | WELDED PORTION OF PIPE |
| 1.0 | 2 | 4 | | 6 | 0.2 | 0.4 | | 0.6 |
| 2.0 | 10 | 6 | | 22 | 1.0 | 0.6 | | 2.2 |
| ⋮ | ⋮ | ⋮ | | ⋮ | ⋮ | ⋮ | | ⋮ |
| 6.2 | 4 | 1 | | 3 | 0.4 | 0.1 | | 0.3 |

DN1 · · · DNm   DN1 · · · DNm

SA1, SA2, ⋮, SAY — SAw

DNr (w)   DN2   DNr (w) t   DN2

FQ1      FQ2

# FIG. 7

# FIG. 8

350     361           362

| TIME HISTORY VIEW | LIST VIEW |
| --- | --- |

CURRENT TIME    1:00, JANUARY 2, 2018

CRACK
DEPTH

0.6

0.4

0.2

0

PREDICTED VALUE
AFTER FOUR WEEKS

PREDICTED VALUE
AFTER TWO WEEKS    $a_f$

PREDICTED VALUE
AT PRESENT TIME    $a_i$

DN1    DN2    DN3    DN4    DN5    DN6   ⋯   DNm

CRACK EVALUATION TARGET POSITIONS

## INTERNATIONAL SEARCH REPORT

| International application No. |
|---|
| PCT/JP2021/017524 |

**A. CLASSIFICATION OF SUBJECT MATTER**
Int. Cl. G01N3/00(2006.01)i, G01N3/32(2006.01)i, G21C17/003(2006.01)i
FI: G01N3/00 W, G01N3/32 J, G21C17/003

According to International Patent Classification (IPC) or to both national classification and IPC

**B. FIELDS SEARCHED**

Minimum documentation searched (classification system followed by classification symbols)
Int. Cl. G01N3/00, G01N3/32, G21C17/003

Documentation searched other than minimum documentation to the extent that such documents are included in the fields searched
Published examined utility model applications of Japan    1922-1996
Published unexamined utility model applications of Japan  1971-2021
Registered utility model specifications of Japan          1996-2021
Published registered utility model applications of Japan  1994-2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2013-96862 A (HITACHI-GE NUCLEAR ENERGY, LTD.) 20 May 2013 (2013-05-20), entire text, all drawings | 1-4 |
| A | JP 2019-113883 A (HITACHI, LTD.) 11 July 2019 (2019-07-11), entire text, all drawings | 1-4 |
| A | WO 2013/179877 A1 (NIPPON STEEL & SUMITOMO METAL CORP.) 05 December 2013 (2013-12-05), entire text, all drawings | 1-4 |
| A | JP 11-237912 A (TOSHIBA CORP.) 31 August 1999 (1999-08-31), entire text, all drawings | 1-4 |

☒ Further documents are listed in the continuation of Box C.    ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 09.07.2021 | 20.07.2021 |

| Name and mailing address of the ISA/ | Authorized officer |
|---|---|
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

| | International application No. |
|---|---|
| | PCT/JP2021/017524 |

C (Continuation).   DOCUMENTS CONSIDERED TO BE RELEVANT

| Category* | Citation of document, with indication, where appropriate, of the relevant passages | Relevant to claim No. |
|---|---|---|
| A | JP 10-96704 A (MITSUBISHI HEAVY INDUSTRIES, LTD.) 14 April 1998 (1998-04-14), entire text, all drawings | 1-4 |
| A | JP 2020-16542 A (TOSHIBA CORP.) 30 January 2020 (2020-01-30), entire text, all drawings | 1-4 |
| A | 植木洋輔, 時系列計測データを活用したダメージ基準生存時間解析に基づく機器の寿命モデル化（化学プラント機器への適用の試み）, 日本機械学会論文集 (Web), Vol. 86, No. 886, 2020, ROMBUNNO.20-00042, pp. 1-13 (UEKI, Yosuke. Lifetime modelling for mechanical equipment by utilizing time-series data based on the damage-based survival analysis (A trial for applying the model to the equipment in a chemical plant). Transactions of the JSME.) | 1-4 |

Form PCT/ISA/210 (continuation of second sheet) (January 2015)

International application No.

PCT/JP2021/017524

| Patent Documents referred to in the Report | Publication Date | Patent Family | Publication Date |
|---|---|---|---|
| JP 2013-96862 A | 20.05.2013 | (Family: none) | |
| JP 2019-113883 A | 11.07.2019 | TW 201734870 A entire text, all drawings | |
| WO 2013/179877 A1 | 05.12.2013 | US 2014/0350904 A1 entire text, all drawings EP 2772746 A1 CN 103890560 A KR 10-2014-0066749 A | |
| JP 11-237912 A | 31.08.1999 | (Family: none) | |
| JP 10-96704 A | 14.04.1998 | (Family: none) | |
| JP 2020-16542 A | 30.01.2020 | (Family: none) | |

Form PCT/ISA/210 (patent family annex) (January 2015)

**EP 4 198 487 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020016542 A